# EUROPEAN PATENT SPECIFICATION

(11) **EP 2 271 026 B1**
(45) Date of publication and mention of the grant of the patent: **11.04.2018**
(21) Application number: 10174772.3
(22) Date of filing: 22.02.2006
(51) Int. Cl.: H04L 12/18, H04L 12/58, H04L 29/08

(54) **Apparatus, and associated method, for facilitating delivery and processing of push content**
Vorrichtung und zugehöriges Verfahren zum Vereinfachen der Lieferung und Verarbeitung von Push-Content
Appareil et procédé correspondant pour faciliter la livraison et le traitement d'un contenu envoyé

(43) Date of publication of application: 05.01.2011
(62) Divisional of application: 06250951.8
(73) Proprietor: BlackBerry Limited, Waterloo, ON N2K 0A7 (CA)
(72) Inventor: Shenfield, Michael, Mississauga, Ontario, L4W 5P1 (CA); Matovsky, Michael, Mississauga, Ontario L4W 0B4 (CA); Karmakar, Srimantee, Mississauga, Ontario L5M 5W1 (CA); Vitanov, Kamen, Mississauga, Ontario L4W 0B4 (CA); Fritsch, Laura Brindusa, Redwood City CA 94065 (US); Bibr, Viera, Mississauga, Ontario L4W 0B5 (CA)
(74) Representative: Fennell, Gareth Charles

(56) References cited:
- EP-A1- 1 187 485
- EP-A1- 1 513 068
- FR-A1- 2 813 416
- US-A1- 2002 004 402

## Description

The present invention relates generally to a manner by which to facilitate the delivery of, and processing of, push content. More particularly, the present invention relates to apparatus, and an associated method, for operating upon the content in a manner that results in the reduction of the amount of outdated content that is communicated and to provide for processing of the content without need for an application, with which the push content is associated, to be active.

When implemented in a mobile, or other radio, communication system, the content is delivered and processed efficiently, both in a more timely manner and requiring lesser amounts of radio resources for the communication of the needed content.

### Background of the Invention

Technological advancements in communication technologies have permitted the development, deployment, and popular usage of many new types of communication systems. The field of mobile communications, for instance, has exhibited significant growth. And mobile communication systems, making use of communication-technology advancements, have been deployed and used by many for telephonic communications as well as communication of data. E-mail messages, communicated both pursuant to store-and-forward and instant messaging schemes, have historically provided for the communication of alphanumeric text messages to and from mobile communication stations. As the capabilities of mobile communication systems improve, and continue to improve, mobile communication systems are increasingly able to communicate content that is more data-intensive.

Push-message services, including the aforementioned instant messaging scheme, provides unique communication advantages in that the content that is communicated is caused to be delivered to a communication device without particular action required of the device to retrieve the content. More timely delivery of the content improves the utility of the communication service in which the push content is communicated. In contrast, data communication schemes that are of a request-response type typically require a user to generate a request and a one-time response is made to the request.

Various proposals are under consideration by which to standardize various aspects of push content communications. For instance, the Open Mobile Alliance (OMA) Limited is promulgating a document entitled, "Dynamic Content Delivery Requirements", pertaining to requirements and protocols associated with content for communication in a mobile communication system. The content delivery scheme set forth therein is intended to be usable in the context of various network technologies and, in various aspects, is intended to enable an application and its delivery to be enhanced and to provide for asynchronous push content.

In one scheme, the content push is generally initiated by a data server at which the content is resident or through which the content is routed. Triggering of the content push is triggered asynchronously, e.g., by a content provider, by a device client, or by a third party. The push event is typically a result of a content subscription to receive particular content, initiated by the content provider, device client, or third party. Additionally, the push event is sometimes also performed as the result of a data broadcast to a selected group of client devices.

Due to the limited bandwidth available for communications by way of a radio air interface in a mobile communication system, efforts are made to utilize the available bandwidth efficiently. And, to maximize an end-user's experience, efforts are also made to effectuate the timely delivery, and display, of pushed content.

Any additional manner that would further reduce communication bandwidth requirements to communicate push content and permit more timely processing and display of the push content would be advantageous. An end user's experience, when viewing a display based upon, or using, the pushed content, would be improved as up-to-date information would be displayed in a timely fashion without display of outdated information.

It is in light of this background information related to the communication of push content that the significant improvements of the present invention have evolved.

EP 1513068 describes a control content transmission method and streaming broadcast system.

### Brief Description of the Drawings

Figure 1 illustrates a functional block diagram of a radio communication system in which an embodiment of the present invention is operable.
Figure 2 illustrates a functional block diagram of portions of a communication device operable pursuant to an embodiment of the present invention.
Figure 3 illustrates a functional block diagram similar to that shown in Figure 2, but here representative of alternate operation of an embodiment of the present invention.
Figure 4 illustrates a representation of a queue structure in an application message store during first exemplary operation of a communication device of an embodiment of the present invention.
Figure 5 illustrates a representation, similar to that shown in Figure 4, but here representative of the queue structure when the communication device is operated in another manner.
Figure 6 illustrates a method flow diagram listing the method of operation of an embodiment of the present invention.

### Detailed Description

The present invention, accordingly, advantageously provides apparatus, and an associated method, by which to facilitate the delivery of, and processing of, push content.

Through operation of an embodiment of the present invention, a manner is provided for operating upon the push content in a manner that results in a reduction of the amount of outdated data that is communicated and that provides for processing of the data without need for an application with which the push content is associated.

When implemented in a radio mobile, or other, communication system, the push content is efficiently communicated and processed, available for display, such as by viewing or play-out, by an end-user of a mobile, or other, communication station. The push data is communicated in a timely manner while also permitting the bandwidth required for its communication to be reduced relative to conventional mechanisms and procedures.

In one aspect of the present invention, special attributes are introduced. The special attributes enhance the delivery and processing of push content.

A replace attribute comprises a special attribute that, when operated upon a notification, i.e., content data, outdated information, forming part of the notification, is, as appropriate, prevented in its transmission, in its processing, or in its viewing. When a notification is operated upon by this attribute, only most up-to-date content, per subscription, is queued and delivered to an application that utilizes the notification.

A background processing attribute is another special attribute. A background processing attribute, when operated upon a notification, permits the notification to be processed while a target application is not running, i.e., is not active. A dedicated device agent updates a persistent store, performed in a background mode, rather than in an active mode, thereby permitting operations to be performed even though an application is not in an active state.

In another aspect of the present invention, the special attribute operations are carried out on a notification at a network device, such as an application server or a proxy server, prior to communication of the notification by way of a radio air interface to a mobile communication station. When embodied at the network device, the operations performed upon the notification, before its communication upon the radio air interface to the mobile communication station, permits, e.g., with respect to the replace attribute, removal of outdated notifications prior to their communication upon a radio air interface. The notifications are, e.g., time-stamped or time-ordered, thereby to identify which notifications are timely and which notifications are outdated. By removing outdated notifications prior to their transmission by way of the radio air interference, radio bandwidth consumption is reduced.

In another aspect of the present invention, the special attribute operations are performed at the mobile communication station. When a replace operation is carried out on notifications, once provided to a mobile communication station, the replace operation removes outdated notifications so that the notifications are not displayed and viewed by an end-user of the communication station. Only timely notifications are viewed. Notifications are time-ordered or time-stamped, again to identify at least a relative timeliness of the notifications. And, by removing the outdated notifications at the mobile station, limited storage space at a mobile station queue is less likely to be used beyond its capacity.

When the background processing attribute is operated at the mobile communication station, operations are performed upon notifications queued at the mobile communication station. By performing background processing operations, an application with which the notifications are associated need not be active. Delays are avoided that would otherwise result if the processing operations were required to be delayed until the associated application becomes active.

Through the identification and operation of the special attributes upon notifications communicated in a push content communication scheme, the end user experience relating to the communication service associated with the communication of the push content is enhanced.

In these and other aspects, therefore, apparatus, and an associated method, is provided for a communication device operable pursuant to a push content communication scheme. A notification processing attribute identifier is configured to identify at least a first selected notification processing attribute. A push content operator is adapted to receive indications of the first selected notification attribute and to receive push content. The push content operator is configured to operate upon the push content in a manner corresponding to an appropriate notification attribute of the at least the first selected notification processing attribute.

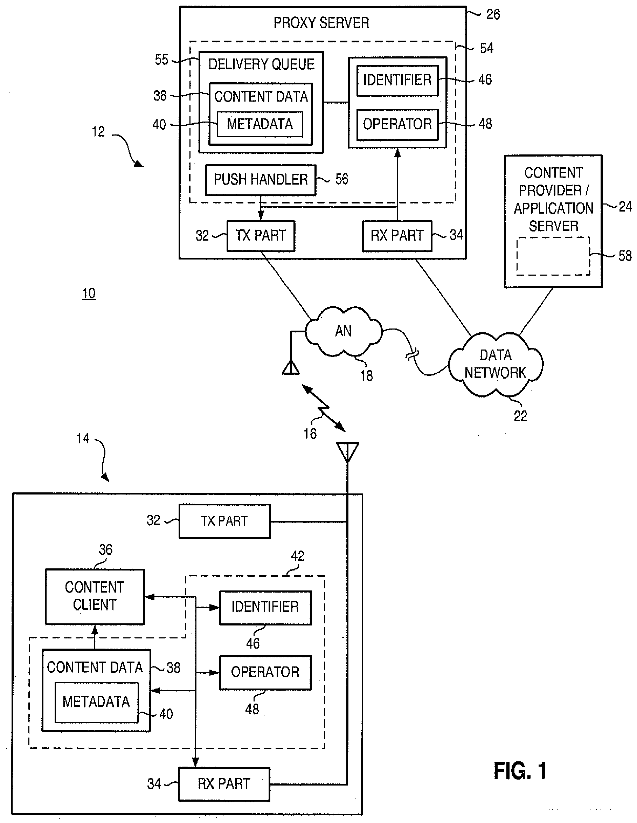

Referring, therefore, first to Figure 1, a communication system, shown generally at 10, provides for radio communication between a network part 12 and a mobile station 14 by way of a radio air interface 16. In the exemplary implementation, content is communicated both by the network part to the mobile station and by the mobile station to the network part. For purposes of describing exemplary operation of an embodiment of the present invention, communication of push content originated at, or provided to, the network part to the mobile station 14 shall be described. Such description is by way of example. Communication of content by the mobile station to the network part is analogously carried out.

The network part is here shown to include an access network (AN) 18 and a data network 22 suitably connected theretogether in communication connectivity. The data network 22 here forms a packet data network, such as the Internet, and communication devices, such as the application server 24 that contains, or generates, content, and shall, at times, herein be referred to as a content provider.

The network part also includes a proxy server 26, here connected to the access network 18 and to the data network 22. Content sourced at the application server is, pursuant to conventional operation, routed to the proxy server by way of the data network. And the proxy server performs a direct wireless push to the mobile station by way of the access network and the radio air interface. for subsequent forwarding on to the mobile station by way of the radio air interface 16.

Content data, herein referred to as notifications, is pushed to the mobile station to deliver the notifications to the mobile station without requiring separate requests to be made by the mobile station. The mobile station includes transceiver circuitry, here represented by a transmit part 32 and a receive part 34. The mobile station also includes a content client 36, representative of an application, an application environment, or, generically, a push agent that consumes content pushed to the mobile station. And content data 38, associated with the content client and metadata 40 are further shown.

The content provider embodied at, or forming, the application server 24 offers dynamic content, e.g., a push-enabled XML web service, and supports content subscription by, or on behalf of, an end-user of the mobile station 14. When content is to be communicated to a mobile station, the content provider sends the content to the proxy server 26 that, in turn, delivers the content using a notification mechanism.

The proxy server 26 interacts with external content providers, such as the content provider formed of the application server 24 and with mobile stations, such as the mobile station 14, and the applications resident thereat. In operation, the proxy server further mediates subscription and notification work flows between the content provider and the mobile station and provides miscellaneous radio optimization services, such as protocol and format transformations, scheduled delivery, temporary storage of content when a mobile station is out of communication range, broadcast services, group subscriptions, and other services.

In the exemplary implementation, the mobile station further includes apparatus 42 of an embodiment of the present invention. The apparatus is functionally represented, formed of functional elements, implementable in any desired manner, such as by hardware implementation, software implementation, using algorithms executable by processing circuitry, and firmware.

The apparatus also includes metadata, also shown at 40, that is associated with the content data 36. The metadata includes, pursuant to an embodiment of the present invention, attributes forming notification processing attributes that are added, e.g., at the application development time. Alternately, the notification processing attributes are loaded into the content client 36, e.g., at an application provisioning phase. Or, the notification provisioning attributes are added to an application deployment descriptor or content manifest to be made available for the mobile station.

The apparatus further includes an identifier 46 and an operator 48. The identifier identifies the notification processing attributes, and the operator, coupled to the identifier to be provided with the network provisioning attributes and to the receive part 34 to receive notifications, i.e., content data, pushed to the mobile station. In the exemplary implementation, analogous content metadata, identifier, and operator elements are embodied at the proxy server 26 and at the application server 24. The apparatus containing these elements at the proxy server 26 is referenced at 54, and the apparatus embodying such elements at the application server 24 is referenced at 58. In an exemplary implementation, different operations are performed at the proxy server and at the mobile station; the different operations, however, serve the same goal of timely removing outdated content and preventing sending of such content over the air and/or displaying such content to an end user of the mobile station. And, in one implementation that uses a keep-last scheme, noted below, use of the apparatus 58 embodied at the application server 24 is obviated.

Here, the apparatus 54 embodied at the proxy server is shown to include a delivery queue 55 and push handler 56 as well as the content data 38 and metadata 40.

In one exemplary embodiment of the present invention, a replace outdated attribute forms a notification processing attribute. The replace outdated attribute is used to indicate to a content client 36 or to the proxy server 26 rules for replacing outdated content or rules for replacing parts of outdated content with new content. In the exemplary implementation, replacement is performed by the operator 48, wheresoever positioned, when the content has not yet reached a final processing stage, e.g., displayed for viewing by the end user. By doing so, the end user experience is improved.

In another exemplary implementation, a background processing attribute forms the notification processing attribute, also identified at the content metadata or elsewhere, such as at an application deployment descriptor or at a content manifest. The background processing attribute, when operated by the operator, is used by a content client to process content when its associated target application is inactive or dormant as well as also to coordinate between the content processed in background and foreground modes.

The properties, i.e., the notification processing attributes, in one implementation, are added to the content metadata, loaded into the server proxy or content client, as shown, at the application provisioning stage. Alternately, the information is added to the application deployment descriptor or content manifest to be made available for a device or software component.

In exemplary operation of the communication system, delivery and processing of notifications that relate to the same dynamic content is carried out. Notifications that relate to the same dynamic content are referred to herein, at times, as like notifications. When multiple like notifications are maintained in a delivery queue, or application message store, available storage capacity is inefficiently utilized as a notification with most up-to-date content overwrites data contained in all other like notifications. The notification with the most up-to-date content is typically a most recent notification. An example of a like notification is a subsequent weather forecast pertaining to a particular location, a subsequent stock quote for a particular stock, etc.

In a replace outdated delivery mode of operation, a replace outdated notification processing attribute, herein also referred to as RO, provides a mechanism and a methodology for replacement of notifications that contain outdated content. The replace outdated attribute is realized advantageously in a system that experiences a backlog of like notifications in one or more of its application message stores, such as at any of the elements of the communication system 10, particularly the content provider, the proxy server, and the mobile station. The backlogs occur, for instance, when a content processing rate is slower than a content delivery rate. Additionally, backlogs occur when low control rules suspend the delivery of the content. A backlog also occurs when a target content consumer is unavailable for an extended period of time. And, a backlog sometimes occurs when a content source produces messages in bursts. Any of these situations is susceptible to occur in a radio or mobile communication system. For instance, the mobile station 14 is sometimes positioned out of coverage during travel or is unable to receive data when operated in another mode, such as when operated pursuant to a voice telephonic call. And, in an emergency situation that results in a peak period of traffic, backlogs of notifications are susceptible, the use of RO processing associated with the replace outdated attribute can, in such instances, avoid or limit communication failures.

When carrying out a replace outdated operation, notifications are ordered, such as with respect to time stamps of the dynamic content contained in the notifications. By providing time stamping, a most up-to-date notification is identified amongst a set of like notifications. Operations by the operator or time stamping and ordering and identification of the most up-to-date notification is provided. Additionally, tracking of notifications with respect to unique message identifiers (IDs) is also provided by the operator. Through the use of unique message identifications, the operator is able to replace an outdated notification, or part of it, using identification information from the replace outdated attribute of the replacing notification.

Additionally, a manner is provided for correlating notifications with respect to dynamic content contained in the notifications. Grouping of like notifications is facilitated. And, in one implementation, the operator performs a replacement algorithm for replacing outdated notification. Execution of the algorithm provides a manner for replacing outdated like notifications with the up-to-date notifications. A replacement algorithm is implementable, e.g., to be time based, identification based, or transformation based. And, in an alternate implementation, rule based algorithms are used. For instance, in one implementation, the metadata 40 carries rule information or provides a link or reference to an external rule. When transformation based, the replace outdated attribute, in one implementation, contains transformation script, e.g., XSLT, or makes reference or link to a transformation that should be applied to an outdated notification message. A radio communication system makes particular advantageous use of a replace outdated mechanism. The content processing rate of a radio communication system is sometimes slower than the content delivery rate, sometimes due to limited resources available at a mobile station when operated in a fast wireless network. Additionally, due to the volatile nature of the operating characteristics of wireless networks and the mobility of a mobile station, the link defined upon a radio air interface between the mobile station and the wireless network is susceptible to severance. When the link is severed, the delivery of content is suspended until the link is restored. And, also to prevent content overflow at the mobile station, various wireless transport protocols control content delivery by temporarily suspending the content delivery.

Through operation of the replace outdated attribute, either at the mobile station or in the network part, such as at the proxy server or application server, the backlog of notifications is alleviated or made less of a problem. When the replace outdated provides for ordering of notifications, a most recent notification is generally the most up-to-date notification. And, as a result, ordering is carried out to sort notifications based upon their times of arrival. Alternate ordering procedures can, or course, alternately be carried out to order the notifications. In another exemplary implementation, notifications are correlated with respect to the dynamic content contained in the notifications. The correlation comprises, e.g., generation of a keep last ID that uniquely identifies a data record set affected by the notification and, hence, a group of like notifications. The keep last identification is formed, e.g., from a data record type and data record keep pairings, one for each key field data field defined in the notification. A keyed data field includes a field that is mapped to some data record in an application data store. In the exemplary implementation, for purposes of simplicity, the order of the pairings in the keep last identification is defined in accordance with the depth first order traversal of the notification data structure. Other orderings of pairings in the keep last identification are also possible. The resulting keep last identification describes all of the keyed data components that might be updated or inserted as a result of notification processing.

In various implementations, various replace outdated attribute values are provided. First, in a replace outdated equals replace previous mode, only the last of the like notifications is replaced with a new notification message. In a replace all previous mode of operation, all previous like notifications are removed and a new notification message is added to the message store. In a replace outdated equals replaced by ID with ID = "# #", the notification specified by the identification attribute is replaced with a new notification message. In a replace fragment mode of operation, the structure of the notification message corresponds to the XML, or other, element to be replaced. The notification specified by the identification attribute is retrieved from a message store and the specified element is replaced with the content of the new notification. The content of the XML, or other, element contains, e.g., an arbitrary data type, such as a binary value, or a link to an arbitrary data, e.g., video stream. In a replace transformation mode, the notification message contains the transformation information that is to be applied to a particular outdated notification, if an identification attribute is specified, or to all previous notifications. The transformation information is presented, e.g., as an attached XSLT document, a link to an XSLT document, or a link to a transformation handler.

When the replace outdated attribute is operated in a replace all previous mode, a replace algorithm is executed, and the oldest of like notifications is replaced and the rest of like notifications are discarded. Execution of this algorithm permits reservation of the rate of dynamic content delivery. An add replacement algorithm is alternately employed. When executed, a new notification is added to the application message store, according to its ordering rules, and all like notifications are discarded. When this replacement algorithm is utilized, the order of the dynamic content delivery is preserved.

The following examples demonstrate application of the replace outdated mechanism to a different type of content and the manner by which the replace outdated operator identifies like notifications using various identification calculation procedures.

The following method considers the following XML definition for data and messages:

```
 Application: SomeApp
 <data name="DataTypeA" key="intField">
       <field name="intField" type="int">
       <field name="stringField" type="DataTypeB">
 <data>
 <data name="DataTypeB" key="strField">
 <field name="stringField2" type="string">
 <data>
 <message name="MyNotification1">
       <field name="myField" type="DataTypeA">
 </message>
```

Then, a MyNotification1 is considered as follows:

```
MyNotification1 RO="replace-all-previous">
       <myField>
 <intField>1234</intField>
       <stringField>
 <stringField2>foo</stringField2>
       </stringField>
       </myField>
 </MyNotification1>
```

Here, the intField uniquely identifies the data contained in a notification message. See, e.g., the value of the key attribute in the "DataTypeA" definition. The replace outdated mechanism uses the combination of application name, message name, and the value of a key attribute to identify replacement identification. In this example, the replacement identification is calculated as <someapp::MyNotification1::1234>. In another example, predefined XML elements are used for identification calculation as follows:

```
 <data expire="02/13/06 12:00am" RO="replace-previous">
  <app>StockQuotes</app>
  <type>StockInfo</type>
  <token>RIMM</token>
  <payload>...</payload>
 <data>
```

Here, the XML elements <app>, <type>, and <token> uniquely identify the data content. For the example XLM notification message, the replacement identification is calculated as: <StockQuotes::STockInfo::RIMM> As a result of this message, all previous RIMM quotes in the message store are replaced with the information contained in the payload.

In an alternate implementation, the message has the following structure:

```
 <data expire="02/13/06 12:00am" RO="replace-fragment"
 ID="StockQuotes::StockInfo::RIMM">
 <payload>...</payload>
 </data>
```

In another example, the replacement ID forms a value of an XML element:

```
 <data RO="replace-by-id" ID=" 1D23AC 17">
 <app>StockQuotes</app>
  <type>StockInfo</type>
  <ID>12564BF2</ID>
  <payload>...
```

In this example, the XML document contains <ID> element that uniquely identifies the notification message. For this XML notification message, the replace outdated processor finds the notification with the identification element value matching the specified identification attribute, i.e., "1D23AC17", and replaces the notification with the new notification.

When the background processing attribute is operated, notifications delivered to a mobile application resident at a mobile station permit update of the internal data of the application. When a notification arrives at the mobile station, the mobile application may, or alternately, may not be, running, i.e., active. If the application is running, each notification is processed when the notification arrives. And, any necessary internal data is updated and, if appropriate, content is displayed to an end user. When the application is running, foreground processing is performed in the manner just-described. A fundamental manner by which to handle notifications when the application is closed, i.e., inactive, is to queue the notifications upon their arrival. When the application is subsequently started, the application processes the notifications stored in its queue.

Through operation of the background processing attribute of an embodiment of the present invention, updates to the internal data of the application take place while the application is closed or inactive. That is to say, background processing of notifications is performed. In operation, the application is still able to release all resources when closed. By acquiring only minimal resources if and when required to process a notification in the background, the data remains continually updated and ready for the end user when the end user subsequently starts, or causes the start of, the operation.

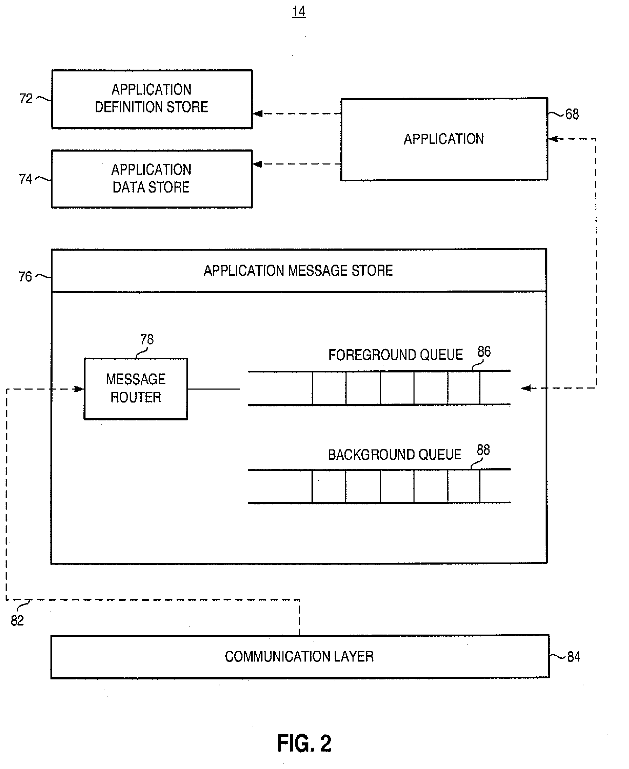

Figure 2 illustrates portions of the mobile station 14 shown in Figure 1 and the application forming the content client 36 thereof. The portions analogously can form parts of the network part, such as the application server 24 or the proxy server 26. Here, an application 68, an application definition store 72, an application data store 74, and an application message store 76 are shown. The application message store includes a message router 78 that is coupled, here represented by way of the line 82, to a communication layer 84.

The application definition store 72 contains data definitions, message definitions and executable scripts. A data definition exists for each unique data type of the application and is given a unique data identifier. The data definition specifies the order and type of fields within a data type. A message definition exists for each unique message type of the application and is given a unique message identifier. The message definition specifies the order and types of field within a message. A message contains one or more data types. The scripts, e.g., are executable Java scripts and operate on one or more of the data types. The arrival and processing of a message triggers the processing of a script. The script, e.g., has access to the data contained within the message. And, script association to a message is specified by an application developer.

The following exemplary data type, referred to as a simple data type, simple data, contains two fields, an integer and a string. Here, the simple data comprises:

```
 <data name="SimpleData" key="intField">
       <field name="intField" type="int">
 <field name="stringField" type="string">
```

All of the data of the simple data type are contained in a collection belonging to the application. When a simple data component is inserted into the collection, the key, which is specified as the field "intField" for this type is used to determine if an existing component in the collection should be updated, or if the component is new.

Another example simple message is shown as follows:

```
 <message name="SimpleMessage">
       <field name="simpleDataField" type="SimpleData">
 </message>
```

The message definition also preferably specifies if the background processing property has been set. In this exemplary embodiment, the background processing property is relevant only if the message is a notifcation. In this example, the definition is extended to:

```
 <message name="SimpleMessage" BackgroundProcessing="true"> .
       <field name="simpleDataField" type="SimpleData">
 </message>
```

A simple script, referred to as SimpleScript is associated with the simple message. Upon processing of the simple message, the SimpleScript also is executed. The SimpleScript performs, e.g., some data operation, displays the data within the message to an end user, or requests some other input. During processing of messages, data updates from messages, including notifications, occur in the same manner in both the foreground and background modes by which the mobile station is operable. The presence of a particular data type in the message indicates how mapping from the message data to the application data should take place. Using the example of the simple message, when the field of type SimpleData is read from the message, the component is stored automatically into the collection of SimpleData types at the application. If the key of the component in the message matches an existing key in the collection, the component in the collection is updated. Otherwise, the component from the message is added as a new component to the collection. The application data store 74 contains the saved data of the application.

The application message store indicates two queues, the foreground queue 86 and the background queue 88. When an application is running, only messages from the foreground queue are processed. When the application is closed, only messages from the background queue 88 are processed. The message router 78 of the application message store routes every incoming message, here received by way of the line 82, for application to the appropriate queue 86 or 88, based upon the state of the application and the background processing property of the notification messages. The message router is made aware of the state of the application by the run time of the application. And, the run time environment notifies the message router 78 when the application 68 is started or closed.

Each incoming message to the device contains an application identification and a message identification. The communication layer 84 uses the application identification to place the message in the appropriate message store 76 where it is picked up by the message router 78. If the application is running, the message is routed to the foreground queue 86. But, if the application is closed, the message router 78 uses the message identification to obtain the appropriate message definition from the definition store 72. If the message definition indicates that the background processing property has been set for the message, the notification is routed to the background queue. Otherwise, the notification is routed to the foreground queue.

In this mode, the running application requires all of the resources for displaying the user interface, processing user events, and keeping all definitions and data in memory in addition to processing of messages and scripts.

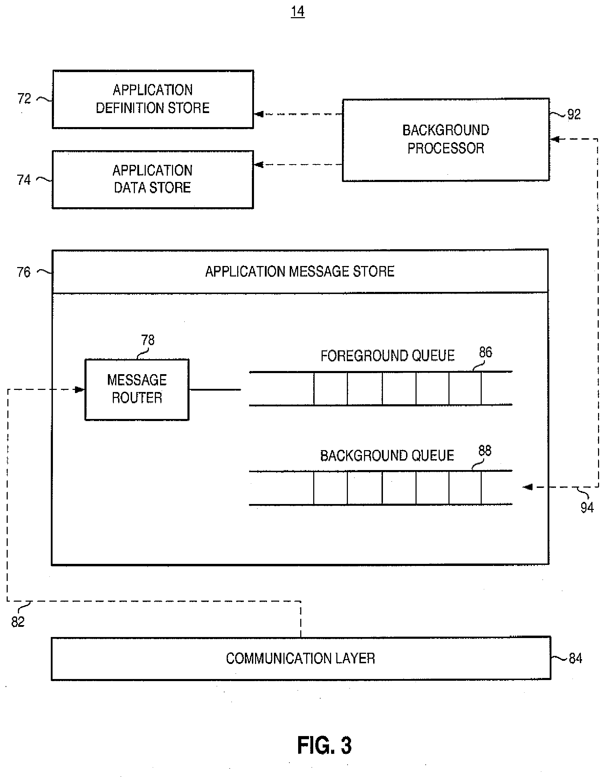

Figure 3 illustrates elements similar to those shown in Figure 2, but here representing a background processor 92 that is coupled, here represented by way of the line 94, with the background queue 88. The background processor 92 is, in one embodiment, central to all applications. Alternately, the background processor is dedicated for a particular application. And, in an extended implementation, an application registers its custom background processor with the run time environment to handle background notifications. In this implementation, the background processor is central to all applications. The message router notifies the background processor of the new notification. The background processor takes the first message off the head of the background queue 88. And, the background processor then accesses the application definition store to obtain the appropriate message definition and any associated script. The processor also accesses the application data store 74 to update and save data.

In this background operation mode, the background processor is idle and it consumes few resources when there are no background notifications to process. When required to process a notification, the background processor temporarily loads only the necessary definitions and data from the applications' store 74.

Foreground rules permit for unrestricted script execution, including both data and user interface operations. If the application is running, but is not the application currently in use, script execution with a user interface operation requiring user input blocks, e.g., further message processing until the input is received. Background rules, in contrast, restrict executable operations from a script. For example, user interface operations cannot be executed when the application is closed. At development time, a developer is given a choice to specify two scripts to be associated with the message, one for foreground execution, and another for background execution. An alternative provides access to an application state flag in the script. UI (User Interface) operations are wrapped by the developer within a check asserting that the application is saved to the running application.

Messaging order is maintained in the background mode. The messaging protocol includes, for instance, a requirement for ordered message processing for an application. The communication layer typically contains the appropriate logic to support ordered messages at the transport level. In a foreground mode, message ordering at the application level is maintained by queuing the messages in the order received at the communication layer and processing the messages in the same order. The introduction of a background queue for processing in the background mode breaks the strict ordering.

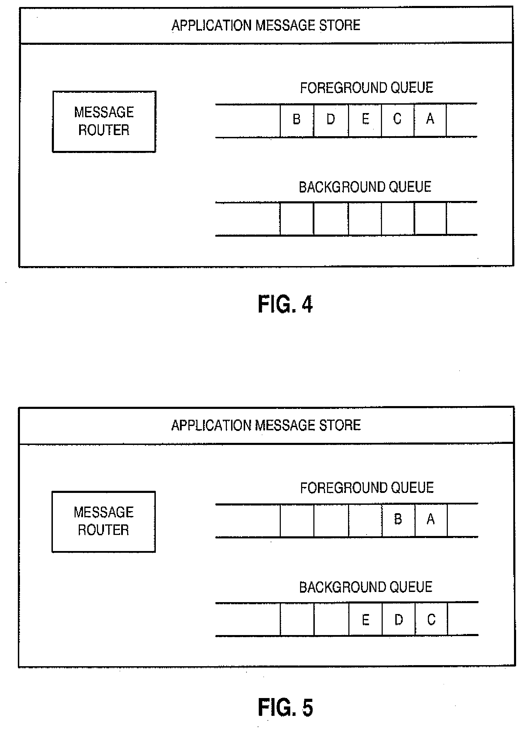

Figure 4 illustrates an exemplary queue structure while the application is running. The application has messages A and B and notification messages C, D, and E. At the moment when the application is closed, the message router filters notifications with the background processing property set and reroutes the notifications to the background queues.

Figure 5 illustrates the resultant queue structure. Notifications with the background processing property set do not remain ordered with respect to non-background messages. This is implied by the nature of the property. However, all notifications with the background processing step still remain ordered with respect to each other. When the application is started, the message router once again reroutes any outstanding messages in the background to the head of the foreground queue.

Flow control is further provided. When the application is running, flow control is administered for the application as a whole. When the foreground queue size reaches a maximum threshold, all messages for the application are suspended. When the foreground queue size falls below a minimum threshold, delivery of all messages to the application are resumed.

When the application is closed, flow control is administered separately for the foreground and background queues. That is, foreground messages are suspended while background messages are delivered and vice versa. Separate thresholds for suspending and resuming the flow of foreground versus background messages can also be set.

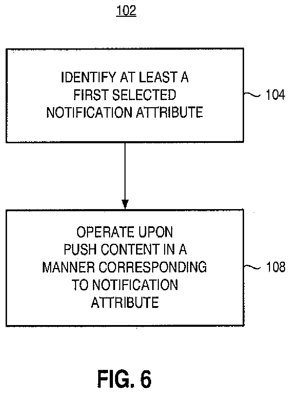

Figure 6 illustrates a method, shown generally at 102, representative of the method of operation of an embodiment of the present invention. The message utilizes push content at a communication device operable pursuant to a push content communication scheme.

First, and as indicated by the block 104, at least a first select notification attribute is identified. Then, and as indicated by the block 108, the push content is operated in a manner corresponding to an appropriate notification attribute of the at least first selected notification processing attribute.

In this manner, therefore, delivery and processing of asynchronous push content is facilitated.

The previous descriptions are of preferred examples for implementing the invention, and the scope of the invention should not necessarily be limited by this description. The scope of the present invention is defined by the following claims.

## Claims

1. A method for replacing outdated content operable pursuant to a push content communication scheme in a radio communication system (10) comprising:
receiving a pushed content item at a server (24, 26), the pushed content item containing metadata (40) which includes a replacement attribute indicating both an outdated part of previously-delivered content and a rule or rules for replacing the outdated part with new content; and
operating, according to the replacement attribute, on the previously-delivered content to prevent transmission to, processing of, or viewing of the outdated part at a content client (36) included in a communication device (14).

2. The method of claim 1 wherein the attribute specifies an identifier of said content item.

3. The method of claim 1 or claim 2 wherein said message contains another content item which replaces said content item.

4. The method of any one of claims 1 to 3 wherein said content item is outdated.

5. The method of any one of claims 1 to 4 wherein the rule or rules specify that replacement of the outdated part with the new content should occur when the outdated part has not yet reached a stage where it has been displayed at the communication device for viewing by an end user.

6. The method of any one of the preceding claims wherein the server (24, 26) is a proxy server (26) or a content provider server (24).

7. A server (24, 26) configured to perform the method of any of claims 1 to 6.

8. A method for replacing outdated content operable pursuant to a content communication scheme in a radio communication system (10) comprising:
receiving at a communication device (14), from a server (24,26), a pushed content item containing metadata (40) which includes a replacement attribute indicating both an outdated part of previously-delivered content and a rule or rules for replacing the outdated part with new content, and
operating, according to the replacement attribute , on the previously-delivered content to prevent said outdated part from being processed by, or viewed at, a content client (36) included in the communication device (14)

9. The method of claim 8 wherein the attribute specifies an identifier of said content item.

10. The method of claim 8 or claim 9 wherein said message contains another content item which replaces said content item.

11. The method of any one of claims 8 to 10 wherein said content item is outdated.

12. The method of any one of claims 8 to 11 wherein the rule or rules specify that replacement of the outdated part with the new content should occur when the outdated part has not yet reached a stage where it has been displayed at the user device for viewing by an end user.

13. The method of any one of claims 8 to 11 wherein the communication device (14) is a mobile station.

14. A communication device (14) configured to perform the method of any one of claims 8 to 13.

15. A computer-readable medium containing instructions which cause either a server (24, 26) to execute a method according to any one of claims 1-6, or a content client (36) included in the communication device (14) to execute a method according to any one of claims 8-13.

## Patentansprüche

1. Verfahren zum Ersetzen von veraltetem Inhalt, das entsprechend einem Push-Inhaltskommunikationsschema in einem Funkkommunikationssystem (10) betreibbar ist, umfassend:
Empfangen eines gepushten Inhaltselements an einem Server (24, 26), wobei das gepushte Inhaltselement Metadaten (40) enthält, die ein Ersetzungsattribut beinhalten, das sowohl einen veralteten Teil von zuvor geliefertem Inhalt als auch eine Regel oder Regeln zum Ersetzen des veralteten Teils mit neuem Inhalt angibt; und
Bearbeiten, gemäß dem Ersetzungsattribut, des zuvor gelieferten Inhalts, um eine Übertragung zum, ein Verarbeiten oder ein Ansehen des veralteten Teils bei einem Inhalts-Client (36), der in einer Kommunikationseinrichtung (14) enthalten ist, zu verhindern.

2. Verfahren nach Anspruch 1, wobei das Attribut eine Kennung des Inhaltselements spezifiziert.

3. Verfahren nach Anspruch 1 oder Anspruch 2, wobei die Nachricht ein anderes Inhaltselement enthält, das das Inhaltselement ersetzt.

4. Verfahren nach einem der Ansprüche 1 bis 3, wobei das Inhaltselement veraltet ist.

5. Verfahren nach einem der Ansprüche 1 bis 4, wobei die Regel oder die Regeln spezifizieren, dass eine Ersetzung des veralteten Teils mit dem neuen Inhalt stattfinden sollte, wenn der veraltete Teil noch keine Stufe erreicht hat, bei der er an der Kommunikationseinrichtung zum Ansehen durch einen Endbenutzer angezeigt worden ist.

6. Verfahren nach einem der vorangegangenen Ansprüche, wobei der Server (24, 26) ein Proxy-Server (26) oder ein Inhaltsanbieterserver (24) ist.

7. Server (24, 26), der zum Durchführen des Verfahrens nach einem der Ansprüche 1 bis 6 konfiguriert ist.

8. Verfahren zum Ersetzen von veraltetem Inhalt, das entsprechend einem Inhaltskommunikationsschema in einem Funkkommunikationssystem (10) betreibbar ist, umfassend:
Empfangen an einer Kommunikationseinrichtung (14), von einem Server (24, 26), eines gepushten Inhaltselements, das Metadaten (40) beinhaltet, die ein Ersetzungsattribut beinhalten, das sowohl einen veralteten Teil von zuvor geliefertem Inhalt als auch eine Regel oder Regeln zum Ersetzen des veralteten Teils mit neuem Inhalt angibt, und
Bearbeiten, gemäß dem Ersetzungsattribut, des zuvor gelieferten Inhalts, um zu verhindern, dass der veraltete Teil durch einen Inhalts-Client (36), der in der Kommunikationseinrichtung (14) enthalten ist, verarbeitet wird oder an diesem angesehen wird.

9. Verfahren nach Anspruch 8, wobei das Attribut eine Kennung des Inhaltselements spezifiziert.

10. Verfahren nach Anspruch 8 oder Anspruch 9, wobei die Nachricht ein anderes Inhaltselement enthält, das das Inhaltselement ersetzt.

11. Verfahren nach einem der Ansprüche 8 bis 10, wobei das Inhaltselement veraltet ist.

12. Verfahren nach einem der Ansprüche 8 bis 11, wobei die Regel oder die Regeln spezifizieren, dass eine Ersetzung des veralteten Teils mit dem neuen Inhalt stattfinden sollte, wenn der veraltete Teil noch keine Stufe erreicht hat, bei der er an der Benutzereinrichtung zum Ansehen durch einen Endbenutzer angezeigt worden ist.

13. Verfahren nach einem der Ansprüche 8 bis 11, wobei die Kommunikationseinrichtung (14) eine Mobilstation ist.

14. Kommunikationseinrichtung (14), die zum Durchführen des Verfahrens nach einem der Ansprüche 8 bis 13 konfiguriert ist.

15. Computerlesbares Medium, das Anweisungen enthält, die bewirken, dass entweder ein Server (24, 26) ein Verfahren gemäß einem der Ansprüche 1-6 ausführt oder ein Inhalts-Client (36), der in der Kommunikationseinrichtung (14) enthalten ist, ein Verfahren gemäß einem der Ansprüche 8-13 ausführt.

## Revendications

1. Procédé pour remplacer un contenu périmé exploitable conformément à un schéma de communication de contenu poussé dans un système de communication radio (10) consistant à :
recevoir un item de contenu poussé au niveau d'un serveur (24, 26), l'item de contenu poussé contenant des métadonnées (40) qui comprennent un attribut de remplacement indiquant à la fois une partie périmée de contenu délivré précédemment et une règle ou des règles pour remplacer la partie périmée par un nouveau contenu ; et
agir, selon l'attribut de remplacement, sur le contenu délivré précédemment afin d'empêcher une transmission jusqu'à, un traitement de, ou une vue de, la partie périmée au niveau d'un client contenu (36) inclus dans un dispositif de communication (14).

2. Procédé selon la revendication 1, dans lequel l'attribut spécifie un identifiant dudit item de contenu.

3. Procédé selon la revendication 1 ou la revendication 2, dans lequel ledit message contient un autre item de contenu qui remplace ledit item de contenu.

4. Procédé selon l'une quelconque des revendications 1 à 3, dans lequel ledit item de contenu est périmé.

5. Procédé selon l'une quelconque des revendications 1 à 4, dans lequel la règle ou les règles spécifient que le remplacement de la partie périmée par le nouveau contenu doit avoir lieu lorsque la partie périmée n'a pas encore atteint un stade auquel elle a été affichée au niveau du dispositif de communication pour être vue par un utilisateur final.

6. Procédé selon l'une quelconque des revendications précédentes, dans lequel le serveur (24, 26) est un serveur mandataire (26) ou un serveur de fournisseur de contenu (24).

7. Serveur (24, 26) configuré pour mettre en oeuvre le procédé selon l'une quelconque des revendications 1 à 6.

8. Procédé pour remplacer un contenu périmé exploitable conformément à un schéma de communication de contenu dans un système de communication radio (10) consistant à :
recevoir, au niveau d'un dispositif de communication (14), d'un serveur (24, 26), un item de contenu poussé contenant des métadonnées (40) qui comprennent un attribut de remplacement indiquant à la fois une partie périmée de contenu délivré précédemment et une règle ou des règles pour remplacer la partie périmée par un nouveau contenu, et
agir, selon l'attribut de remplacement, sur le contenu délivré précédemment afin d'empêcher ladite partie périmée d'être traitée par, ou vue au niveau de, un client contenu (36) inclus dans le dispositif de communication (14).

9. Procédé selon la revendication 8, dans lequel l'attribut spécifie un identifiant dudit item de contenu.

10. Procédé selon la revendication 8 ou la revendication 9, dans lequel ledit message contient un autre item de contenu qui remplace ledit item de contenu.

11. Procédé selon l'une quelconque des revendications 8 à 10, dans lequel ledit item de contenu est périmé.

12. Procédé selon l'une quelconque des revendications 8 à 11, dans lequel la règle ou les règles spécifient que le remplacement de la partie périmée par le nouveau contenu doit avoir lieu lorsque la partie périmée n'a pas encore atteint un stade auquel elle a été affichée au niveau du dispositif utilisateur pour être vue par un utilisateur final.

13. Procédé selon l'une quelconque des revendications 8 à 11, dans lequel le dispositif de communication (14) est une station mobile.

14. Dispositif de communication (14) configuré pour mettre en oeuvre le procédé selon l'une quelconque des revendications 8 à 13.

15. Support pouvant être lu par ordinateur contenant des instructions qui amènent soit un serveur (24, 26) à exécuter un procédé selon l'une quelconque des revendications 1 à 6, soit un client contenu (36) inclus dans le dispositif de communication (14) à exécuter un procédé selon l'une quelconque des revendications 8 à 13.
